(19) Europäisches Patentamt
European Patent Office
Office européen des brevets

(11) EP 2 605 046 A2

(12) **EUROPEAN PATENT APPLICATION**

(43) Date of publication:
**19.06.2013 Bulletin 2013/25**

(51) Int Cl.:
***G01V 1/28*** *(2006.01)* ***G01V 1/36*** *(2006.01)*

(21) Application number: **12197282.2**

(22) Date of filing: **14.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2011 US 201161576019 P**

(71) Applicant: **CGGVeritas Services SA**
**91300 Massy (FR)**

(72) Inventors:
- **Rbel, Estelle**
  **91300 MASSY (FR)**
- **Meunier, Julien**
  **91300 MASSY (FR)**

(74) Representative: **Regimbeau**
**20, rue de Chazelles**
**75847 Paris Cedex 17 (FR)**

(54) **Device and method for locating microseismic events using array of receivers**

(57) Device and method for locating a microseismic event taking place in a subsurface of the earth. The method includes receiving recorded seismic data S(t, Rc) acquired by a plurality of receivers as function of time t and position Rc; receiving a reference signal model SiMo(t, Rc) corresponding to seismic data recorded by the plurality of receivers if an explosion occurs at an injection point in the subsurface; time correlating recorded seismic data S(t, Rc) with signal model SiMo(t, Rc) to determine correlated seismic data DMSS; calculating a detection curve for each of plural cells in a given volume in the subsurface of the earth based on correlated seismic data DMSS; and determining a seismic location in the volume of the microseismic event based on a largest value of maximums of the detection curves calculated for various points of the given volume in the subsurface.

Figure 5

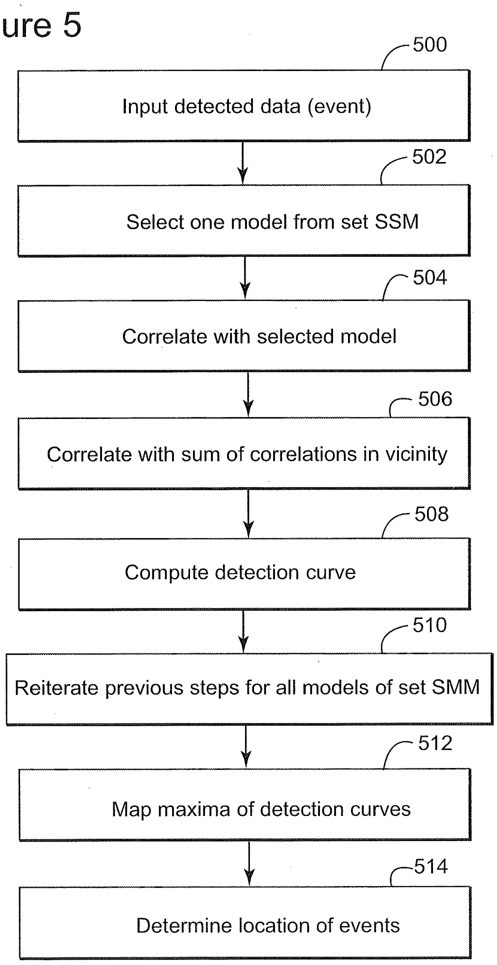


EP 2 605 046 A2

**Description**

## CROSS-REFERENCE TO RELATED APPLICATIONS

The present application is related to and claims the benefit of priority of U.S. Provisional Application Serial No. 61/576,019, filed on December 15, 2011, having the title "Device and Method for Locating Microseismic Events Using Array of Receivers," and being authored by E. Rebel and J. Meunier, the entire content of which is incorporated herein by reference.

## BACKGROUND

## TECHNICAL FIELD

Embodiments of the subject matter disclosed herein generally relate to methods and systems and, more particularly, to mechanisms and techniques for locating microseismic events underground.

## DISCUSSION OF THE BACKGROUND

Stimulated fracturing operations are intended to increase the productivity of a hydrocarbon reservoir working well. These operations include injecting a high-pressure fluid into a layer of the subsoil where the reservoir is located. The injection of the fluid produces micro-fractures in the layer. This technique makes it possible to increase the permeability of the reservoir by favoring hydrocarbon circulation via the micro-fractures to the well.

The micro-fractures of the layers are the source of microseismic events. To determine these microseismic events, geologists or geophysicists conventionally record at the surface waves generated by the micro-fractures. The waves are recorded as a function of time by one or more receivers. The signals recorded by the receivers are known as seismic traces.

However, the stimulated fracturing operations require continuous monitoring of the reservoir so as, on one hand, to monitor the progress of the fracturing operation and, on the other, to stop the operations when the fracturing is sufficient.

The seismic sensors are deployed in the vicinity of the reservoir. The conventional way of determining the microseismic events in the explored area is to deploy a few sensors inside the observation well(s) and to monitor the fracturing events. Another way is to deploy seismic sensors at or close to the earth surface.

However, the known methods do not enable rapid data processing, and are not suitable for real-time subsoil monitoring. Further, if the receivers are installed in the injection well, the well tends to vibrate under the effect of this injection, which raises the noise level on the receivers positioned in this well. Also, it is not always possible to have access to another well. Furthermore, the known methods do not provide an accurate location of the microseismic event and/or its type.

Accordingly, it would be desirable to provide systems and methods that avoid the afore-described problems and drawbacks.

## SUMMARY

According to one exemplary embodiment, there is a method for determining a location of a microseismic event and for characterizing the observed microseismic event. The method includes receiving recorded seismic data S(t, Rc) acquired by a plurality of receivers as a function of time t and a position Rc; receiving a reference signal model SiMo(t, Rc) that corresponds to seismic data recorded by the plurality of receivers if an event occurs at an injection point in the subsurface; time correlating the recorded seismic data S(t, Rc) with the reference signal model SiMo(t, r) to determine correlated seismic data DMSS; calculating a detection curve for each of plural cells in a given volume in the subsurface of the earth based on the correlated seismic data DMSS; and determining a seismic location in the volume of the microseismic event based on a largest value of maximums of the detection curves calculated for various points of the given volume in the subsurface.

According to another exemplary embodiment, there is a device for locating a microseismic event taking place in a subsurface of the earth. The device includes an interface configured to receive recorded seismic data S(t, Rc) acquired by a plurality of receivers as a function of time t and a position Rc; and a processor connected to the interface. The processor is configured to receive a reference signal model SiMo(t, Rc) that corresponds to seismic data recorded by the plurality of receivers if an explosion occurs at an injection point in the subsurface, time correlate the recorded seismic data S(t, Rc) with the reference signal model SiMo(t, Rc) to determine correlated seismic data DMSS, calculate a detection curve for each of plural cells in a given volume in the subsurface of the earth based on the correlated seismic data DMSS, and determine a seismic location in the volume of the microseismic event based on a largest value of maximums of the detection curves calculated for various points of the given volume in the subsurface.

Another to still another exemplary embodiment, there is a computer readable medium including computer executable instructions that execute the steps of the method noted above.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a system for determining a position of a microseismic event according to an exemplary embodiment;

Figure 2 is a grid of receivers provided on the ground for measuring seismic data;

Figure 3 is a schematic representation of data measured by receivers according to an exemplary embodiment;

Figure 4 is a flowchart illustrating a method for detecting, locating and characterizing a microseismic event according to an exemplary embodiment;

Figure 5 is a flow chart illustrating an algorithm for locating a microseismic event according to an exemplary embodiment;

Figure 6 is a schematic diagram showing a location of a calibration point and a location of a microseismic event according to an exemplary embodiment;

Figure 7 is a schematic representation of a cross-correlation between raw data and a reference signal model according to an exemplary embodiment;

Figure 8 is a schematic diagram of a plurality of receivers and a vicinity of one receiver;

Figure 9 is a schematic representation of a cross-correlation between raw data and a reference signal model when a microseismic event occurs at the same location as a calibration shot according to an exemplary embodiment;

Figure 10 is a schematic representation of maximum values of the detection curve obtained at each point of a grid according to an exemplary embodiment;

Figure 11 is a graph of a detection curve for a given signal model according to an exemplary embodiment;

Figure 12 is a schematic representation of a cross-correlation of raw data and an extrapolated reference signal model according to an exemplary embodiment;

Figure 13 is a flow chart of a method for calculating a position of a microseismic event according to an exemplary embodiment;

Figure 14 is a schematic representation of a amplitudes and signs associated with a correlation product according to an exemplary embodiment;

Figure 15 is a schematic diagram of a device in which one or more of the methods may be implemented; and

Figure 16 is a flow chart of a method for calculating a position of a microseismic event according to an exemplary embodiment.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of microseismic events generated by fracturing. However, the embodiments to be discussed next are not limited to such events but may be applied to other sources of seismic events.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, there is a method that locates or locates and characterizes microseismic events observed in a subsurface of the earth. The method correlates recorded traces with a signal model for determining the location of the microseismic events and amplitudes and signs of the correlated traces for determining the characteristics of the microseismic events.

A system 10 for recording and/or determining the positions of the microseismic events is illustrated in Figure 1. The system 10 is deployed above a subsurface zone of interest that includes geological layers 12, 14, and 16. Layer 16 is a layer containing hydrocarbons. A well 18 is drilled through the geological layers to the layer 16. The system 10 includes a fracturing device 20 and a monitoring device 50. The fracturing device 20 includes a fluid injection column 22 extending into the well 18 and a pumping unit 24 positioned on the surface 26 of the subsurface zone. The injection column 22 includes a lower end 28 provided with openings 30 and an upper end 32 connected to the pumping unit 24.

The pumping unit 24 includes a pump 34 configured to inject a high-pressure fracturing fluid 36 into the layer 16 via the injection column 22. The fracturing fluid typically consists of a mixture of a liquid (for example, water) and particles (for example, sand).

The fracturing fluid is discharged from the column 22 via openings 30 created by well casing perforations. The fracturing fluid enters the subsurface layer 16, inducing fracturing of the layer 16, i.e. the appearance of cracks inside the layer 16. The particles contained in the fracturing fluid are forced into the cracks and remain in place in the cracks when the fluid pressure is released, thus forming a permeable network enabling hydrocarbon to flow in the layer 16 to the well 18.

The monitoring device 50 may be separately located from the fracturing device 24 or on the fracturing device 24. The monitoring device may include a network 52 of receivers (e.g., geophones) 54, a recording unit 56 and a processing unit 58. The receiver network 52 includes a plurality of receivers 54 arranged on the soil surface 26 or in the vicinity of this surface. The receivers 54 may be arranged on the nodes of a grid 60 as shown in Figure 2 or may be arranged in any other configuration. The processing unit 58 may be configured to implement any of the methods discussed next.

The soil movements detected by the receivers 54 are converted into signals (e.g., electric voltages) and they are transmitted to the recording unit 56 to be recorded therein. The recordings obtained represent the seismic data (or traces). For example, according to an exemplary embodiment, signals s(t, r) are detected by the receivers 54. The signal s is a function of the position r of the receiver and the time t at which it is recorded. An example of traces recorded by the plural receivers shown in Figure 2 is illustrated in Figure 3, in which each trace (identified by a trace index parameter) is plotted versus time.

According to an exemplary embodiment illustrated in Figure 4, a method for detecting, locating, and characterizing a microseismic event progresses as discussed next. In step 400, a set of signal models that depend on a velocity model and the statics of the monitored area is selected or determined. Part of the information contained in the signal model is the time of propagation of an event (e.g., an explosion) that would occur at a theoretical injection point (hereafter referred as calibration point), e.g., point 62 in Figure 1, and would be recorded by the seismic receivers 54 located close to the surface 26.

In step 402, the recorded seismic data at the receivers 54 is correlated with the data of the signal model from step 400 for a current location, as will be discussed later. If the microseismic event is located at the same place as the calibration point, the correlations should exhibit a seismic phase that has the same arrival time for each sensor. At this step the microseismic event may be detected. For example, a method for detecting the microseismic event is described in U.S. Patent Publication Application no. 2010/0302905, author J. Meunier, which is assigned to the assignee of this patent application, and which content is incorporated herein by reference in its entirety. After this step, the method advances to step 404 for further calculations for locating the position of the microseismic event. It is noted that in these steps a focal mechanism of the microseismic events may be ignored.

In step 404, as will be discussed later in more details, each correlation is further correlated with sum of correlations in a vicinity of a potential location of the microseismic event and these correlations are summed together to calculate a reference detection curve. Based on multiple detection curves calculated for a plurality of potential locations of the micro-seismic event, the actual location of the micro-seismic event is determined.

In step 406, the micro-seismic event (which was located in step 404) is characterized in terms of its direction, dip and rake, by inverting the amplitudes and sign distributions of the detected event based on the amplitudes of the above noted correlations. For example, the amplitudes are (i) inverted to determine the focal mechanism or (ii) the amplitudes are modified and summed based on various possible focal mechanisms to determine the correct focal mechanism.

The above noted steps are now discussed in more details. The step 400 of building a set of signal models (SSM) involves generating a model at each point Sg of a source grid. In other words, Sg indicates a possible position of a source of the micro-seismic event. The potential source positions Sg are physically distributed under a receiver grid as the seismic event is generated underground and the receivers are placed above ground. Thus, the source grid is a three-dimensional grid.

If a signal model for a reference source position Sg0 (i.e., in the subsurface) is considered to be *SiMo*(*t, Rc, Sg*0)*,* where Rc is the vector indicating the receiver position in a receiver grid, the signal model *SiMo*(*t, Rc, Sg*0) can be extrapolated from Sg0 to another location Sg (in the source grid) and the extrapolated model is described by *SiMo*(*t, Rc, Sg*). This model may be calculated or measured. For example, if the model is calculated, it is assumed that a micro-seismic event takes place at a reference point r = ($X_{Sg0}$, $Y_{Sg0,}$ $Z_{Sg0}$,) in the subsurface (the source grid noted above). Based, for example, on the wave equations, and knowing the displacement of the earth at the reference point ($X_{Sg0}$, $Y_{Sg0}$, $Z_{Sg0}$), the seismic waves that propagate from the reference point ($X_{Sg0}$, $Y_{Sg0,}$ $Z_{Sg0}$) to each receiver 54 (location Rc in the receiver grid) may be calculated so that the signals to be recorded by the receivers may be estimated.

Alternatively, the signal model may be measured by producing a controlled micro-seismic event at the reference point ($X_{Sg0}$, $Y_{Sg0}$, $Z_{Sg0}$) and recording the traces detected at the receivers 54. For clarity, it is noted that there is a perforation shot location point 62 characterized by coordinates $X_{Sg0}$, $Y_{Sg0}$, and $Z_{Sg0}$, a micro-seismic event has a location 64 characterized by coordinates Xms, Yms, and Zms as shown in Figure 6, and the position of a receiver is characterized by the vector Rc. The position of the perforation shot location and the position of the micro-seismic event may be different from each other or coincide.

For simplicity, the signal model may be characterized by an rms velocity of the medium Vrms and by a residual statics correction Stat(Sg0) for a location Sg0. However, the model may be more complex, i.e., has plural velocities depending on the anisotropy of the subsurface. For this simple model, the rms velocity describes the fact that various layers in the earth have different properties and thus, different speeds, and the residual statics correction describes, for example, that a location Rc at the surface 26 of the earth may be elevated by a given height relative to other points of the surface and this needs to be accounted for. Thus, a correction is necessary to be applied to this point if a receiver 54 happens to be provided at this point or near it. Other examples of residual statics corrections are know in the art.

The signal model *SiMo*(*t, Rc, Sg*) can be extrapolated from Sg0 to point Sg of the source grid based on, for example, the relation: $SiMo(t,Rc,Sg) = SiMo(t,Rc,Sg0) \times \delta\left(t + \frac{d_{Sg0(Rc)} - d_{Sg(Rc)}}{V_{rms}}\right)$ with $d_{Sg0}$(Rc) being the distance between the calibration point 62 (Sg0) and the different sensors 54 (see Figure 6) and $d_{Sg}$(Rc) being the distance between the model at point Sg and the different sensors 54. Thus, the SSM set is built for each point Sg of the source grid.

The step 402 associated with the detection of the microseismic event is not detailed here as this step is described in the above noted patent application.

The step 404 of locating the microseismic event is discussed now in more details with regard to Figure 5. Figure 5 shows a step 500 in which data detected data by the receivers 54 is provided as input. In step 502, a signal model from the SSM is selected and this model is characterized, for example, by *SiMo*(*t,Rc,Sg*). With reference to step 504, the data may be correlated as discussed next. Consider that seismic data S(t, Rc) (recorded by the receivers 54) is correlated with the signal model *SiMo*(*t, Rc, Sg*). The correlation may include a convolution operator and the correlation operator is denoted "⊗." Thus, the correlation DM is given by $DM(t, Rc, Sg) = s(t, Rc) \otimes SiMo(t, Rc, Sg)$.

The convolution product is a mathematical operation that combines two different functions f and g to produce a third function h that can be viewed as a modified version of one of the original functions f and g. The convolution product in this embodiment is performed in time t and not in space (Rc). The complex conjugate of a signal s(t, r) that varies in time t and is recorded at position r is understood to be $\overline{s(t, r)}$.

Based on the above mathematical operations, the seismic data S(t, Rc) is correlated with the signal model *SiMo*(*t, Rc, Sg*) to obtain DM (i.e., data correlated with the model), which is given by $DM(t, Rc,Sg) = S(t, Rc) * \overline{SiMo(t, Rc, Sg)}$, and this data is illustrated in Figure 7.

Further, a similarity of each correlated trace with adjacent correlated traces is evaluated in step 506 of Figure 5. For example, DMSS (DM data correlated by SS where SS is defined next) is defined as $DMSS(t, Rc, Sg) = DM(t, Rc, Sg) \cdot SS(t, Rc, Sg)$, where $SS(t, Rc, Sg) = \Sigma_V DM(t, Rc, Sg)$ with SS being the sum of the traces contained in a vicinity V of the trace *DM*(*t,Rc,Sg*). The vicinity V may be a disk having a radius Rd centered on the trace *DM*(*t, Rc, Sg*) in question. Figure 8 illustrates the plural receivers 54 and the vicinity V having the radius Rd. It is noted that Figure 8 illustrates the receiver grid, which is substantially flat as the receivers lie on the ground. The source grid discussed above extends beneath the receiver grid. In step 508, a detection curve for the current location Sg is generated by summing all the DMSS together, $DC(t, Sg) = \Sigma_{RC} DMSS(t, Rc, Sg)$

If a microseismic event is located at the same place where the calibration point is recorded, the above noted correlations (i.e., DM and not DMSS) should exhibit a seismic phase that has the same arrival time for each receiver, as shown in Figure 9. However, if a microseismic event is located away from the calibration point, the correlations exhibit a seismic phase that has an arrival time that differs from one sensor to the other as shown in Figure 7. The time shifts from one receiver to the other increase with the distance between the microseismic event and the calibration point.

Thus, in order to determine the position of the microseismic event, it might be necessary to repeat steps 502 to 508 using all of the models of the set of signal models SSM. In this step 510, a source grid 70 is defined around the reference point as shown in Figure 10. The grid 70 is three dimensional (located in the subsurface) but Figure 10 illustrates only a two dimensional slide of the grid for simplicity. The reference point is considered to have coordinates ($X_{Sg0}$=0, $Y_{Sg0}$=0, $Z_{Sg0}$=0,) and the entire grid is considered to cover a cube (or other shape) having a side of, for example, 600 m. Of course, other sizes are possible and depend on the specific situation. In the field, the receiver grid shown in Figure 8 may be in top of the three dimensional source grid of Figure 10 so that the sources are below the receivers.

When the models of the set SSM have been used, i.e., the current position has been changed to consider the points of the source grid 70, a detection curve (DC) is calculated in step 512 versus time for each point of the source grid 70. The detection curve DC may be calculated based on the mathematical expression $DC(t, Sg) = \Sigma_{RC}\ DMSS(t, Rc, Sg)$. It is noted that the detection curve is no longer a function of Rc. In step 512, maximums of the detection curves at each point are identified and plotted on the source grid and the location of the microseismic event is determined in step 514 by selecting the position corresponding to the largest maximum of the detection curves.

Thus, in step 512, a map of the maxima of the detection curves is analyzed and the location of the maximum is interpolated between the grid points in step 514. Figure 10 shows that detection curves have been calculated for all points 72 and a maximum of 10 has been determined for location 74. The remaining cells 72 show a value of the detection curve between 1 and 9. Figure 11 shows an example of the shape of the detection curve when calculated in time for a given extrapolated position. The arrival time of the maximum of the correlation between the observed data and the model extrapolated at this location is constant as observed in Figure 12.

Having the tools introduced above, it is now possible to discuss in more detail the steps for locating the microseismic event. According to an exemplary embodiment illustrated in Figure 13, an algorithm for calculating the position of the microseismic event may be implemented in a processor to start with a step 1300 in which traces S(t, Rc) are received from the recorders. In step 1302 a signal model SiMo(t, Rc, Sg) is selected from the set of signal models SSM. In step 1304 the selected signal model is correlated with the recorded traces to produce the DM(t, Rc, Sg). The process advances to step 1305 in which the sum of neighboring traces SS is calculated using the expression $SS(t, Rc, Sg) = \Sigma_{RC \in V}\ DM(t, Rc, Sg)$ where V is an area defined around receiver Rc. The process then goes to step 1306 in which DM (t, Rc, Sg) is further multiplied with the sum of neighboring traces SS(t, Rc, Sg) (calculated in step 1305) for determining DMSS(t, Rc, Sg). Then, in step 1308 the detection curve DC(t) is calculated for the current location Sg. The detection curve (DC) may be calculated based on mathematical expression $DC(t, Sg) = \Sigma_{RC}\ DMSS(t, Rc, Sg)$. It is noted that the detection curve is no longer a function of Rc. In step 1312, the maximum value of the detection curve (DC) is mapped at the corresponding point Sg of source grid 70.

However, at this step it might not be known the location of the microseismic event. To determine this location, the process moves to step 1311 which consists of repeating steps 1302 to 1312 for all signal models of set SSM after all points of the grid have been considered. Note that there is a detection curve (that varies in time) for each point of the grid. In step 1312, the maximum point for each detection curve is selected and mapped as shown in Figure 10. The largest value of this map is selected in step 1314 as indicating the location of the microseismic event.

Having identified the position of the microseismic event, the process illustrated in Figure 4 advances to step 406 for characterizing the microseismic event. As noted above, in step 406, the sign and amplitude changes of the correlations DM are considered. More specifically, any given focal mechanism is associated to a certain distribution of signed amplitudes of DM. The focal mechanism of a seismic event describes the inelastic deformation in the source region that generates the seismic waves. Focal mechanisms are derived from a solution of the moment tensor for the seismic event, which itself is estimated by an analysis of the observed seismic waveforms. Depending on the focal mechanism, the ground displacements measured by the receivers may be only positive (if an explosion occurred in the subsurface) or both positive and negative (for an earthquake) or may have other distributions.

For example, assume for a given microseismic event that there are only two possible focal mechanisms: a mechanism A that generates only positive displacements at the receivers 54 and a mechanism B that generates half positive displacements and half negative displacements for the plurality of receivers 54. Let N be the sum of the maximums of the correlations DM with their original sign and M be the same sum after reversal of the negative signs predicted by focal mechanism B. If N is larger than M, then focal mechanism A is the correct mechanism. The reverse is true if M is larger than N. This simplified and likely unrealistic scenario is only used to illustrate the application of some aspects of the invention. In a real situation, it is noted that more focal mechanisms are possible and each of them can be evaluated in the same manner as A and B in the above simplified example.

According to another exemplary embodiment, an alternate method is possible for determining the focal mechanism. According to this exemplary embodiment, the signs and amplitudes of the correlations may be inverted to directly determine the focal mechanism. Irrespective of the chosen process, after step 406 the focal mechanism is determined.

In step 406 shown in Figure 4 characteristics of the microseismic event are obtained from the focal mechanism, and the signed amplitude distribution of the correlations, as illustrated in Figure 14. Figure 14 shows some of the correlations 80 calculated at the receivers 54 having one sign and the remainder of the correlations 82 having a different sign. Each focal mechanism corresponds to a given amplitude and sign distribution, i.e., has its own signature. The inversion of this distribution leads to the characteristics of the fault on which a microseismic event occurred, i.e., its direction, its dip and its rake.

The methods discussed above may be implemented in dedicated devices (e.g., dedicated networks or computers or cloud computing networks, etc.) for being performed. A combination of software and hardware may be used to implement the above described methods. A dedicated machine that can implement one or more of the above discussed exemplary embodiments is now discussed with reference to Figure 15.

An exemplary computing arrangement 1500 suitable for performing the activities described in the exemplary embodiments may include server 1501. Such a server 1501 may include a central processor (CPU) 1502 or 58 coupled to a random access memory (RAM) 1504 and to a read-only memory (ROM) 1506. The ROM 1506 may also be other types of storage media to store programs, such as programmable ROM (PROM), erasable PROM (EPROM), etc. The processor 1502 may communicate with other internal and external components through input/output (I/O) circuitry 1508 and bussing 1510, to provide control signals and the like. The processor 1502 carries out a variety of functions as is known in the art, as dictated by software and/or firmware instructions.

The server 1501 may also include one or more data storage devices, including hard and floppy disk drives 1512, CD-ROM drives 1514, and other hardware capable of reading and/or storing information such as DVD, etc. In one embodiment, software for carrying out the above discussed steps may be stored and distributed on a CD-ROM 1516, diskette 1518 or other form of media capable of portably storing information. These storage media may be inserted into, and read by, devices such as the CD-ROM drive 1514, the disk drive 1512, etc. The server 1501 may be coupled to a display 1520, which may be any type of known display or presentation screen, such as LCD displays, plasma display, cathode ray tubes (CRT), etc. A user input interface 1522 is provided, including one or more user interface mechanisms such as a mouse, keyboard, microphone, touch pad, touch screen, voice-recognition system, etc.

The server 1501 may be coupled to other computing devices, such as the landline and/or wireless terminals via a network. The server may be part of a larger network configuration as in a global area network (GAN) such as the Internet 1528, which allows ultimate connection to the various landline and/or mobile clients.

As also will be appreciated by one skilled in the art, the exemplary embodiments may be embodied in a wireless communication device, a computer network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized including hard disks, CD-ROMs, digital versatile disc (DVD), optical storage devices, or magnetic storage devices such a floppy disk or magnetic tape. Other non-limiting examples of computer readable media include flash-type memories or other known memories.

According to an exemplary embodiment illustrated in Figure 16, there is a method for locating a microseismic event taking place in a subsurface of the earth. The method includes a step 1600 of receiving recorded seismic data S(t, Rc) acquired by a plurality of receivers as a function of time t and a position r; a step 1602 of receiving a reference signal model SiMo(t, r) that corresponds to seismic data recorded by the plurality of receivers if an explosion occurs at an injection point in the subsurface; a step 1604 of time correlating the recorded seismic data s(t, r) with the reference signal model SiMo(t, r) to determine correlated seismic data DMSS; a step 1606 of calculating a detection curve for each of plural cells in a given volume in the subsurface of the earth based on the correlated seismic data DMSS; and a step 1608 of determining a seismic location in the volume of the microseismic event based on a largest value of maximums of the detection curves calculated for various points of the given volume in the subsurface.

The disclosed exemplary embodiments provide a system and a method for estimating a position and/or a characteristic of a microseismic event. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

**1.** A method for locating a microseismic event taking place in a subsurface of the earth, the method comprising:

receiving (1302) recorded seismic data S(t, Rc) acquired by a plurality of receivers as a function of time t and a position Rc;
receiving (1300) a reference signal model SiMo(t, Rc) that corresponds to seismic data recorded by the plurality of receivers if an event occurs at an injection point in the subsurface;
time correlating (1304, 1306) the recorded seismic data S(t, Rc) with the reference signal model SiMo(t, r) to determine correlated seismic data DMSS;
calculating (1310) a detection curve for each of plural cells in a given volume in the subsurface of the earth based on the correlated seismic data DMSS; and
determining (1314) a seismic location in the volume of the microseismic event based on a largest value of maximums of the detection curves calculated for various points of the given volume in the subsurface.

**2.** The method of Claim 1, further comprising:

calculating the detection curve for a single location in the given volume by summing correlated seismic data DMSS for a given vicinity V of a trace S(t, Rc) having the position Rc.

**3.** The method of Claim 2, further comprising:

calculating the detection curve for the various points in the given volume, the various points having corresponding locations.

**4.** The method of Claim 3, further comprising:

selecting (1314) the seismic location from the locations associated with the various points of the given volume such that the detection curve corresponding to the selected seismic location has a maximum peak larger than any maximum peak of the remaining detection curves corresponding to the plural locations of the given volume.

**5.** The method of Claim 1, wherein the step of correlating comprises:

calculating (1304) a correlation DM(t, Rc) of S(t, Rc) with SiMo(t, Rc); and
calculating (1306) the correlated seismic data $DMSSXCor_0$(t, Rc) as a multiplication between the correlation DM(t, Rc) and a sum of neighbor correlations DM(t, R), where the neighbor correlations are calculated in a vicinity V of the location Rc, wherein the vicinity V has the radius Rd and R is smaller than or equal to Rd.

**6.** The method of Claim 1, further comprising:

extrapolating the reference signal model SiMo(t, Rc) to other locations in the given volume to obtain an extrapolated signal model $SiMo_{extrapolated}$(t, Rc).

**7.** The method of Claim 6, further comprising:

calculating the correlated seismic data DMSS for the extrapolated signal model $SiMO_{extrapolated}$(t, Rc);
calculating the detection curve based on the extrapolated signal model $SiMo_{extrapolated}$(t, Rc);
repeating the above calculations for the various point of the volume; and
selecting the seismic location that corresponds to the extrapolated signal model $SiMo_{extrapolated}$(t, Rc) that determines a constant arrival time of the maximum of the correlation between the recorded seismic data S(t, Rc) and the extrapolated signal model $SiMo_{extrapolated}$(t, Rc).

**8.** The method of Claim 7, wherein the extrapolated signal model $SiMo_{extrapolated}$(t, ) is determined by:

$$SiMo_{extrapolated}(t, Rc, Sg) = SiMo(t, Rc) \times \delta\left(t + \frac{d_{p(Rc)} - d_{Sg(Rc)}}{V_{rms}}\right)$$

with dp(Rc) being a distance between the injection point and the plurality receivers and $d_{Sg}$(Rc) is a distance between a location Sg and the plurality of receivers.

**9.** The method of Claim 1, further comprising:

assigning a focal mechanism to the microseismic event based on amplitude of the correlated seismic data DM (t, Rc).

**10.** The method of Claim 9, further comprising:

deriving a sign distribution of the amplitude of the correlated seismic data DM over the plurality of receivers;
selecting a possible focal mechanism and correcting polarities of the signs based on the selected possible focal mechanism;
summing up the polarities corrected correlated seismic data DM;
repeating these steps for various focal mechanisms; and
selecting the actual focal mechanism for which the summed up polarities corrected correlated seismic data DM is maximum.

**11.** The method of Claim 9, further comprising:

inverting an amplitude and a sign distribution of the correlated seismic data DM corresponding to the microseismic event to determine the focal mechanism.

**12.** A device for locating a microseismic event taking place in a subsurface of the earth, the device comprising:

an interface (1510) configured to receive recorded seismic data S(t, Rc) acquired by a plurality of receivers as a function of time t and a position Rc; and
a processor (1502) connected to the interface and configured to,
receive a reference signal model SiMo(t, Rc) that corresponds to seismic data recorded by the plurality of receivers if an explosion occurs at an injection point in the subsurface,
time correlate the recorded seismic data S(t, Rc) with the reference signal model SiMo(t, Rc) to determine correlated seismic data DMSS,
calculate a detection curve for each of plural cells in a given volume in the subsurface of the earth based on the correlated seismic data DMSS, and
determine a seismic location in the volume of the microseismic event based on a largest value of maximums of the detection curves calculated for various points of the given volume in the subsurface.

**13.** The device of Claim 12, wherein the processor is further configured to:

calculate the detection curve for a single location in the given volume by summing correlated seismic data DMSS for a given vicinity V of a trace S(t, Rc) having the position Rc.

**14.** The device of Claim 13, wherein the processor is further configured to:

calculate the detection curve for the various points in the given volume, the various points having corresponding locations.

**15.** A computer readable medium including computer executable instructions, wherein the instructions, when executed, implement a method for locating a microseismic event taking place in a subsurface of the earth, the method comprising:

receiving (1302) recorded seismic data S(t, Rc) acquired by a plurality of receivers as a function of time t and a position Rc;
receiving (1300) a reference signal model SiMo(t, Rc) that corresponds to seismic data recorded by the plurality of receivers if an explosion occurs at an injection point in the subsurface;
time correlating (1304, 1306) the recorded seismic data S(t, Rc) with the reference signal model SiMo(t, Rc) to determine correlated seismic data DMSS;
calculating (1310) a detection curve for each of plural cells in a given volume in the subsurface of the earth based on the correlated seismic data DMSS; and
determining (1314) a seismic location in the volume of the microseismic event based on a largest value of maximums of the detection curves calculated for various points of the given volume in the subsurface.

Figure 1

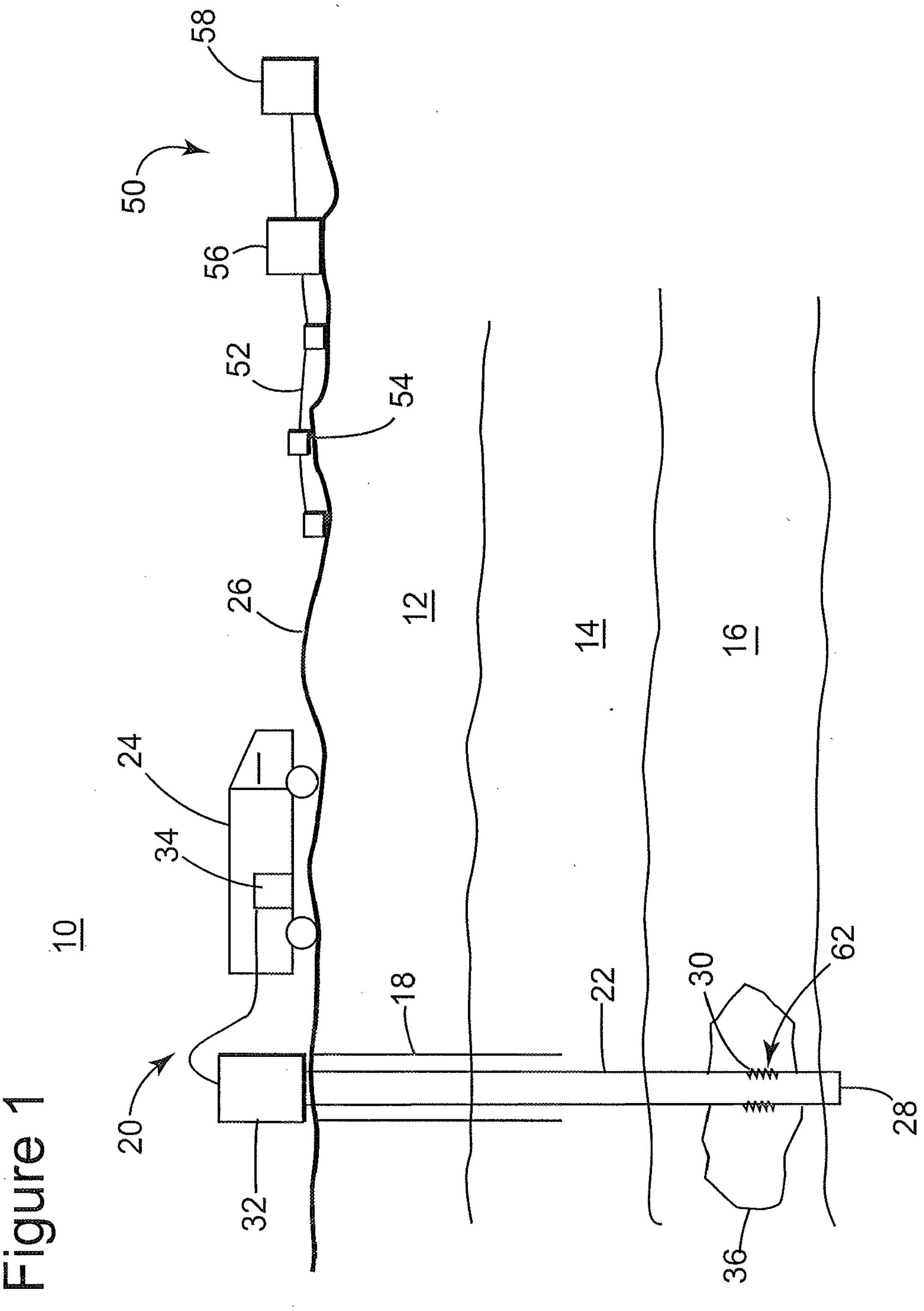

Figure 2

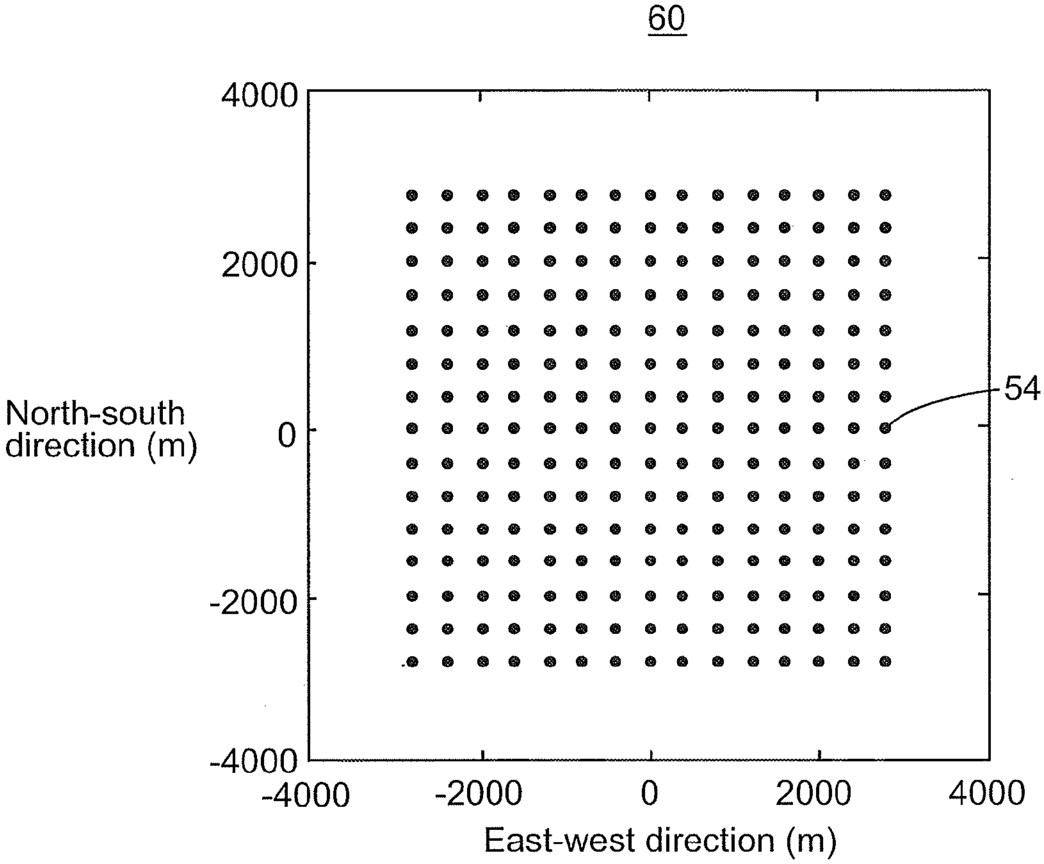
60
4000
2000
North-south
direction (m)
0
-2000
-4000
-4000
-2000
0
2000
4000
East-west direction (m)
54

Figure 3

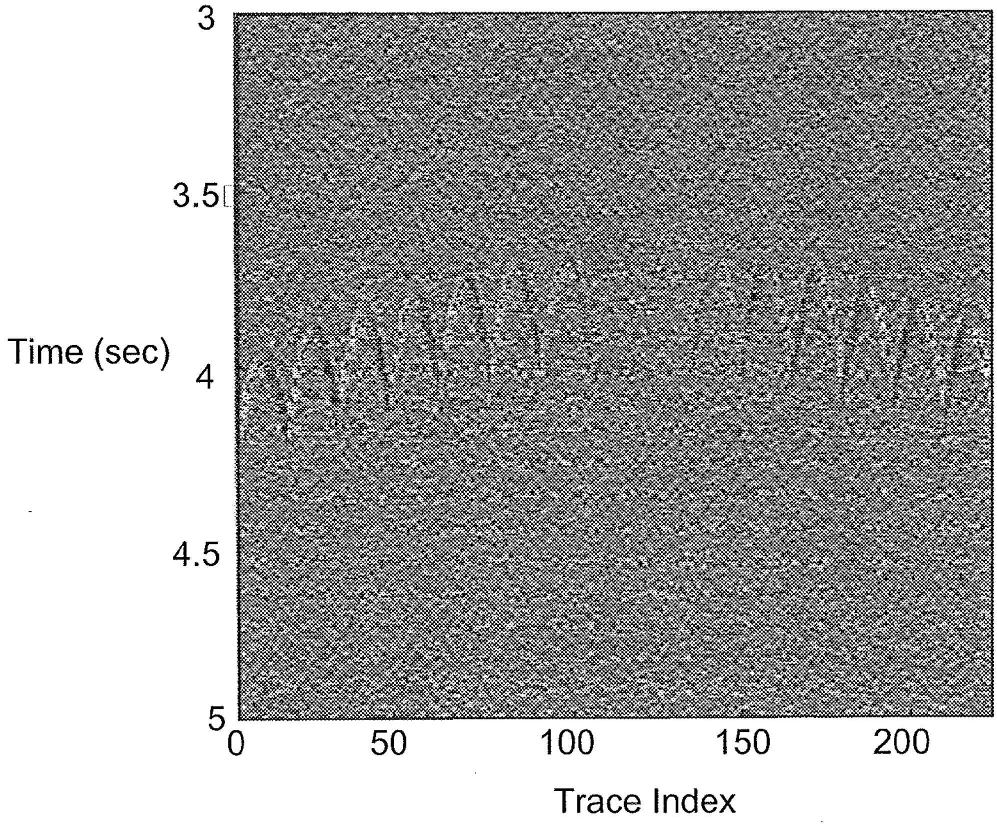

Figure 4

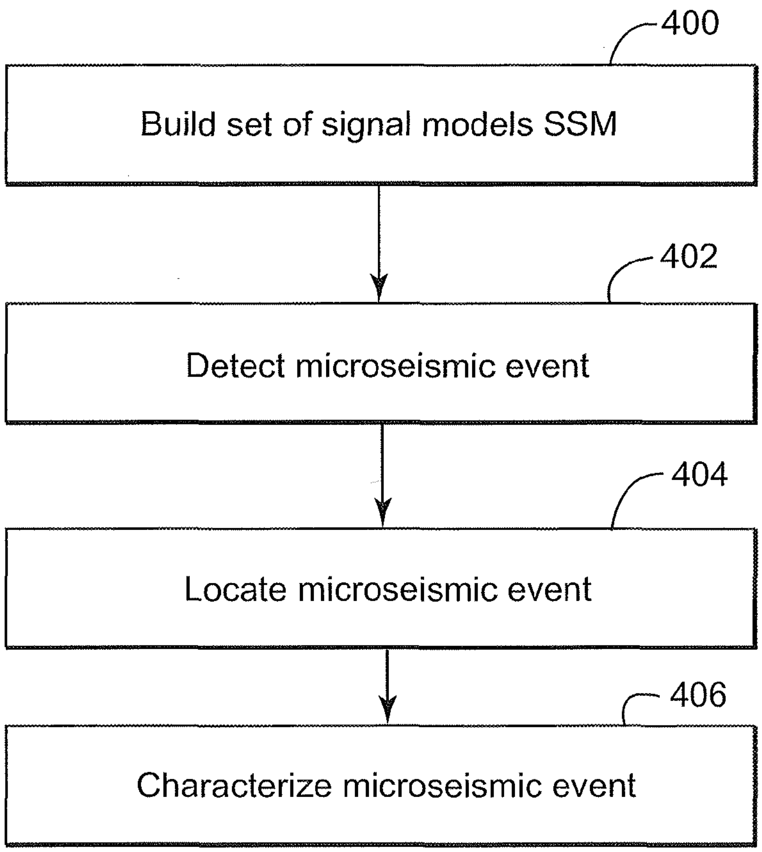
400
Build set of signal models SSM
402
Detect microseismic event
404
Locate microseismic event
406
Characterize microseismic event

Figure 5

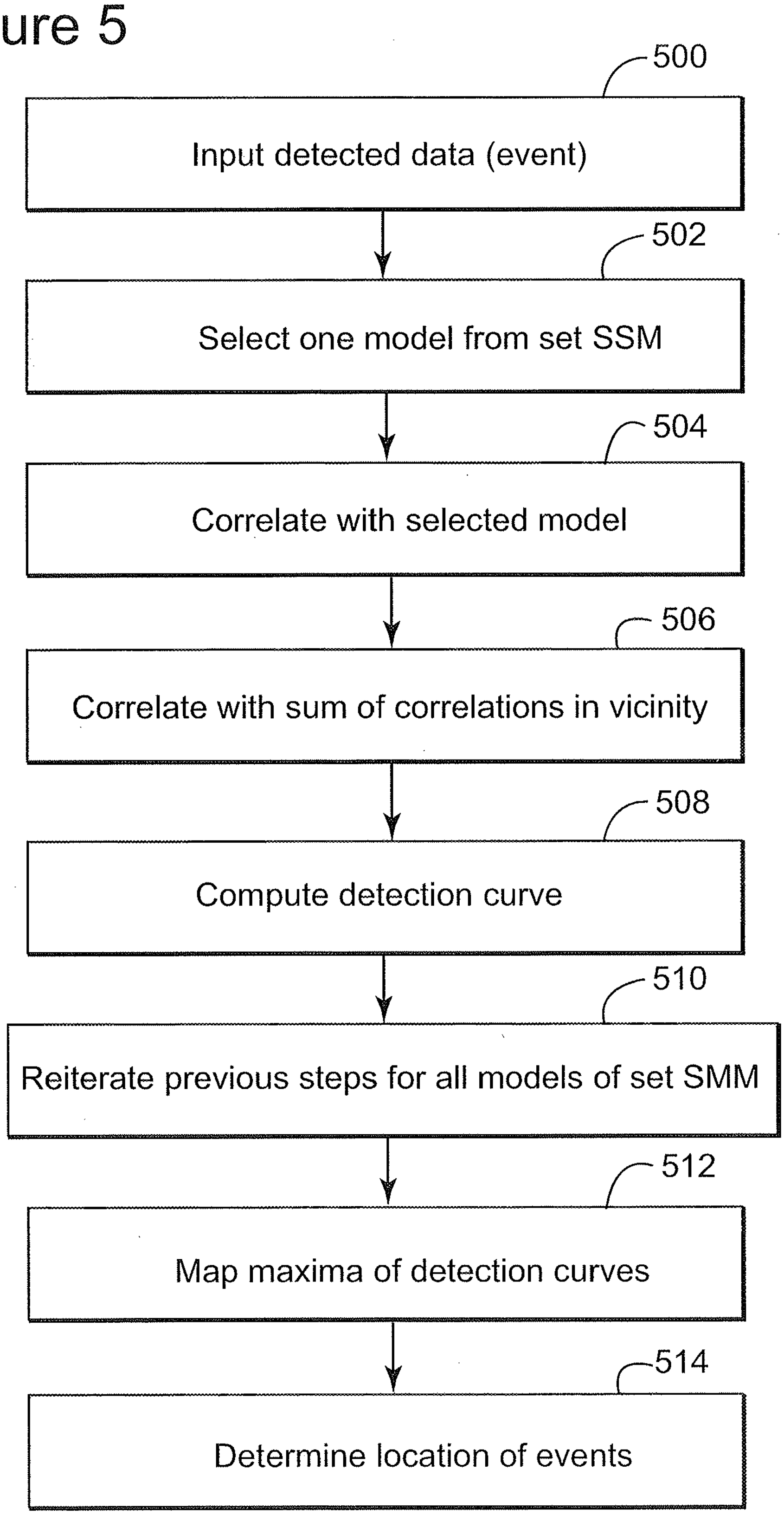
500
Input detected data (event)
502
Select one model from set SSM
504
Correlate with selected model
506
Correlate with sum of correlations in vicinity
508
Compute detection curve
510
Reiterate previous steps for all models of set SMM
512
Map maxima of detection curves
514
Determine location of events

Figure 6

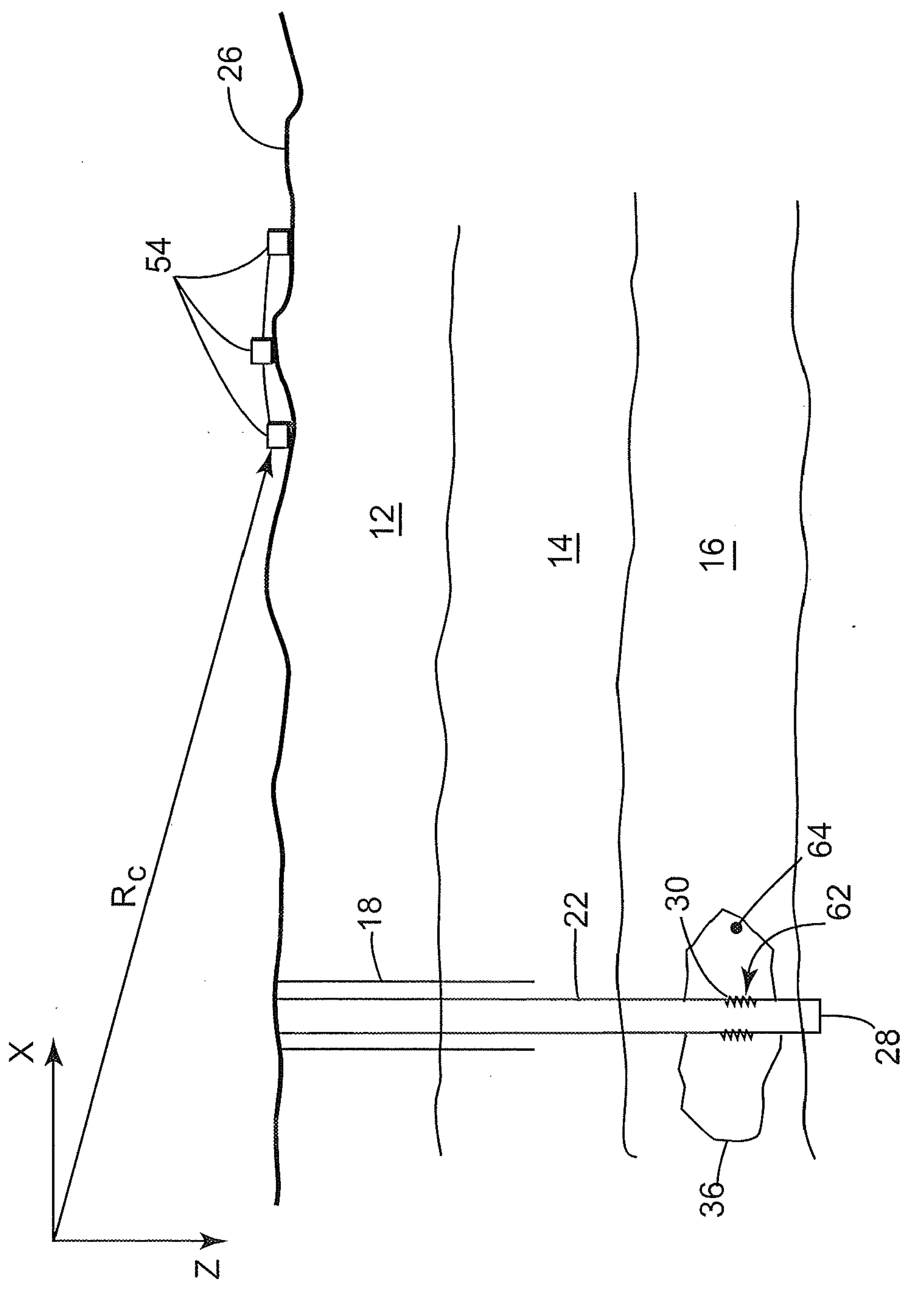

Figure 7

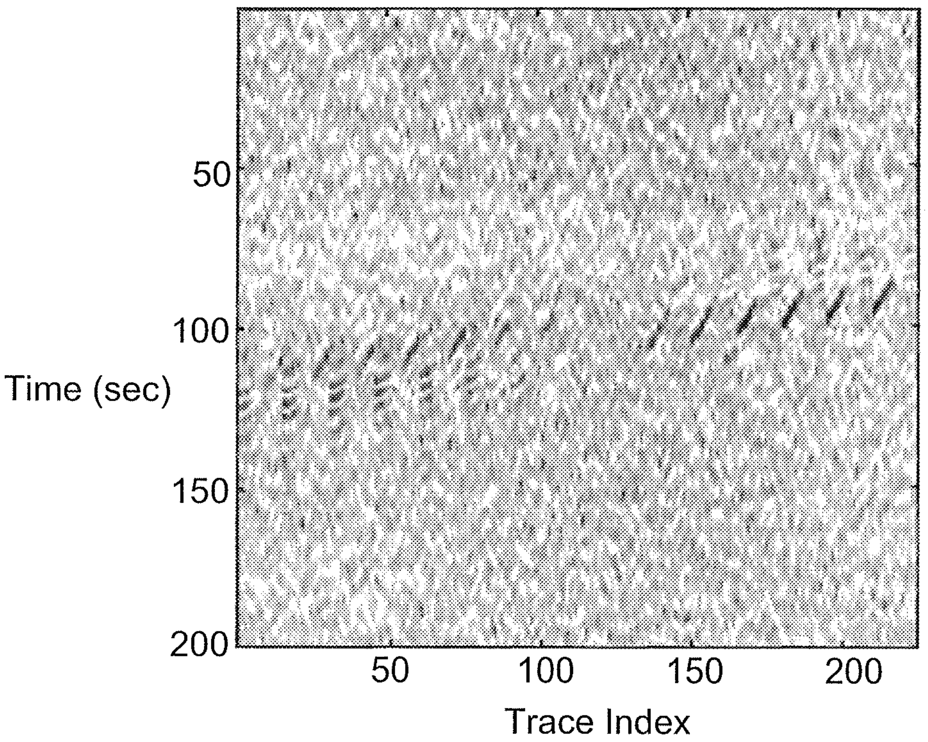

Figure 8

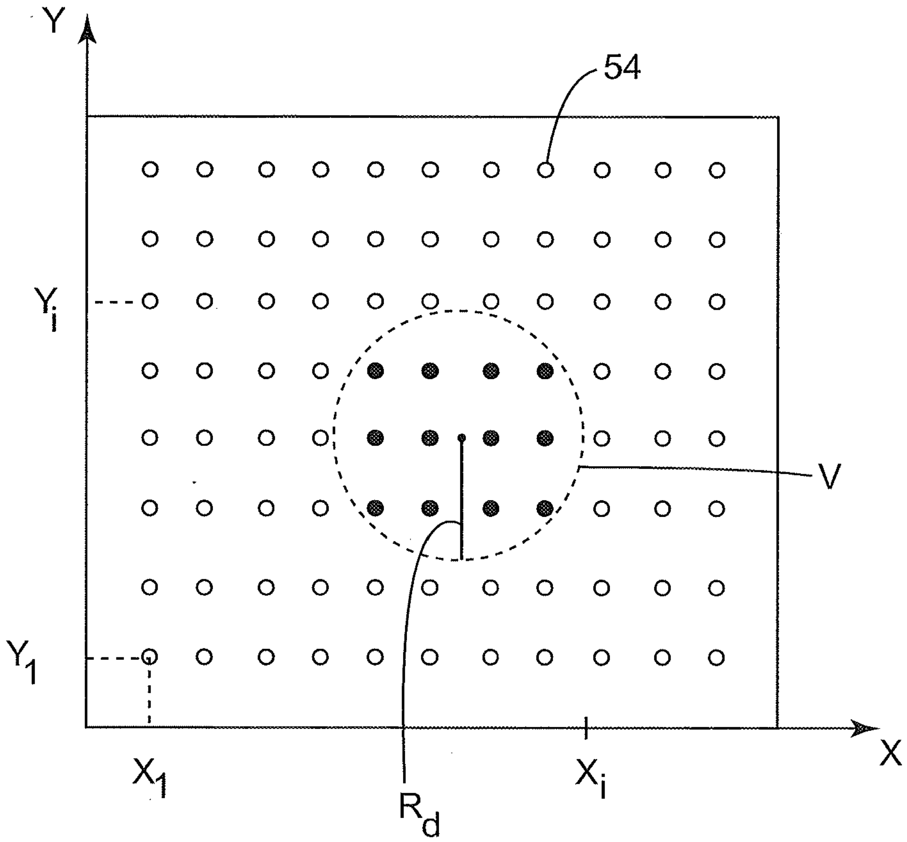

Figure 9

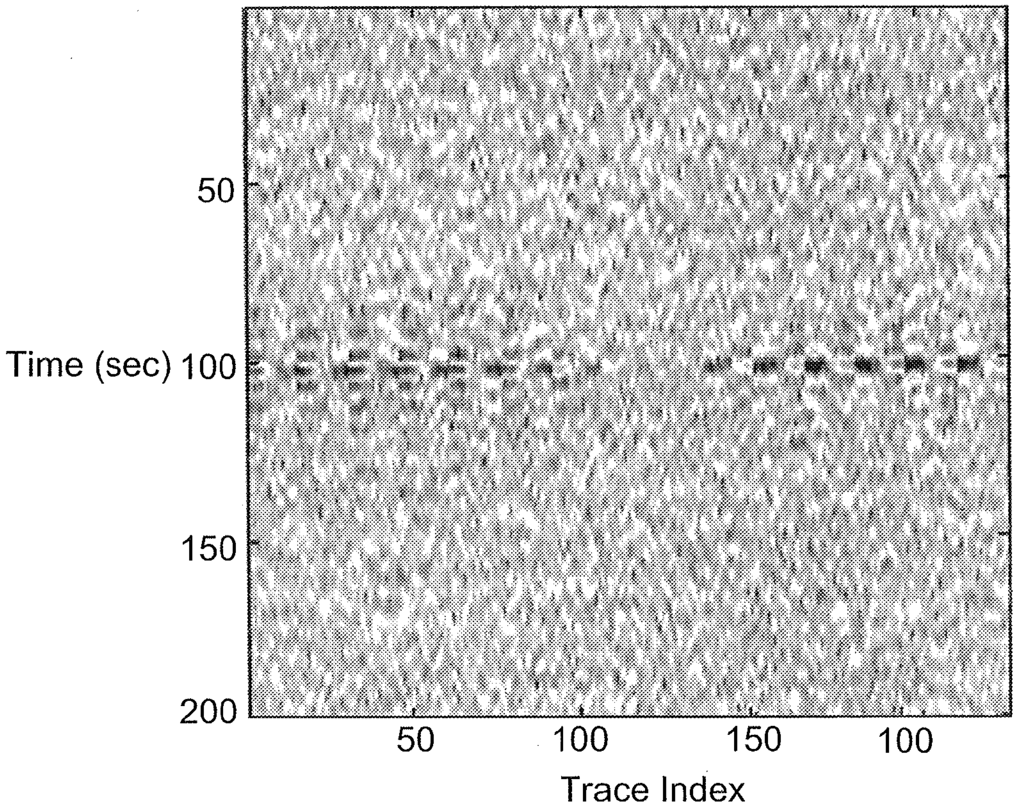

Figure 10

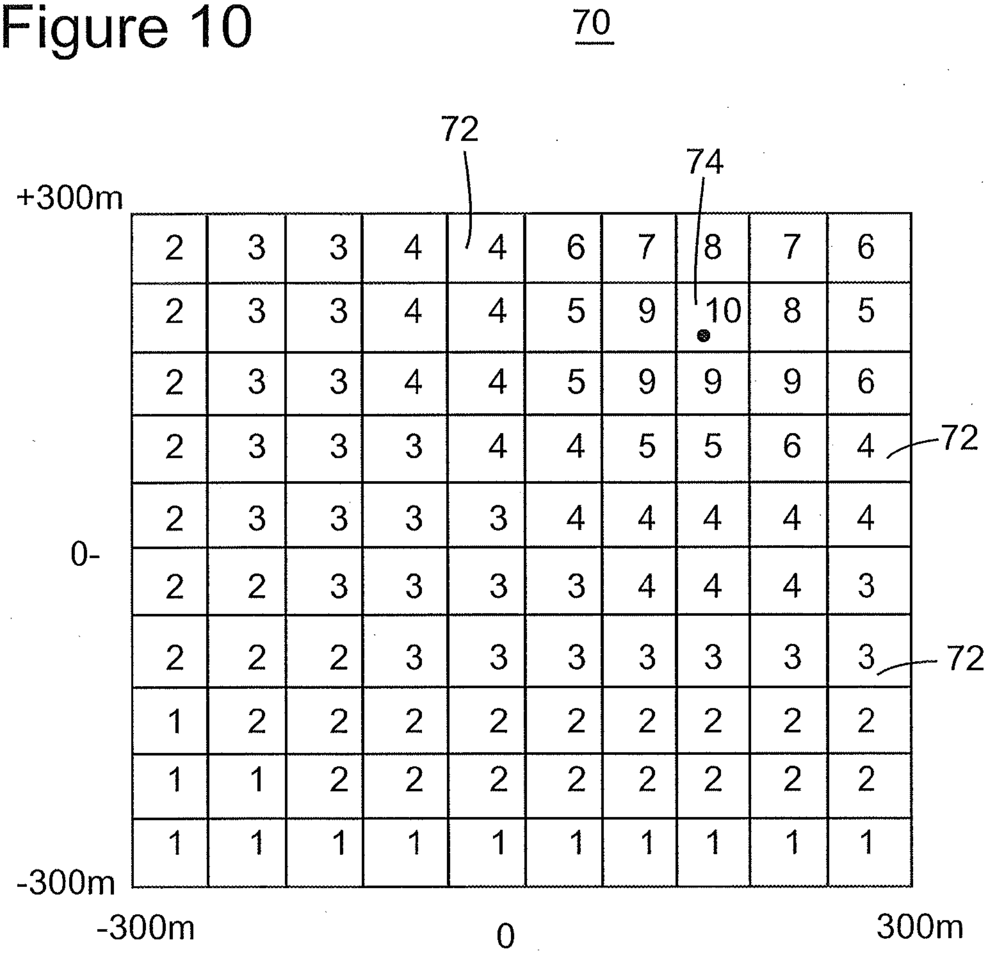
70
72
74
+300m
0-
-300m
-300m
0
300m
72
72
2 3 3 4 4 6 7 8 7 6
2 3 3 4 4 5 9 10 8 5
2 3 3 4 4 5 9 9 9 6
2 3 3 3 4 4 5 5 6 4
2 3 3 3 3 4 4 4 4 4
2 2 3 3 3 3 4 4 4 3
2 2 2 3 3 3 3 3 3 3
1 2 2 2 2 2 2 2 2 2
1 1 2 2 2 2 2 2 2 2
1 1 1 1 1 1 1 1 1 1

Figure 11

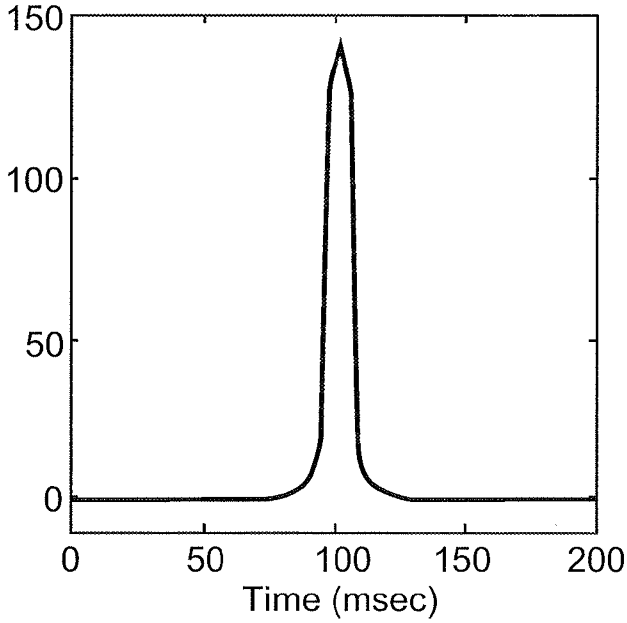


Figure 12

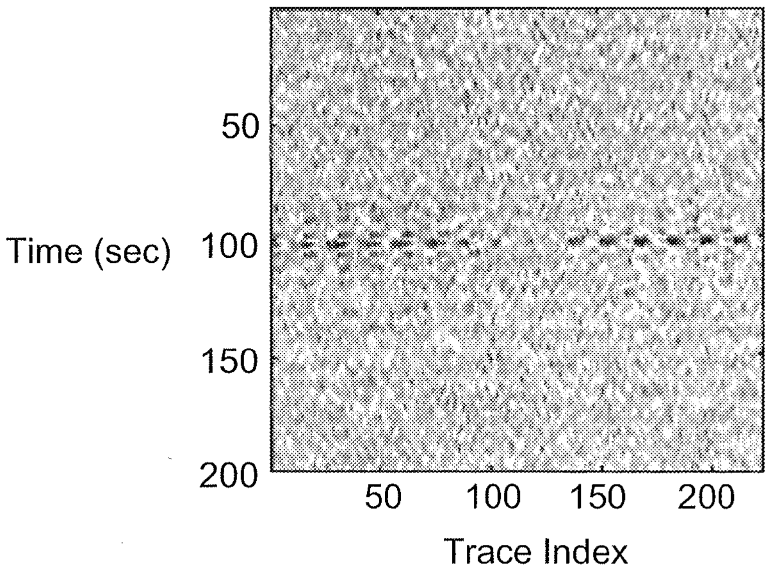

Figure 13

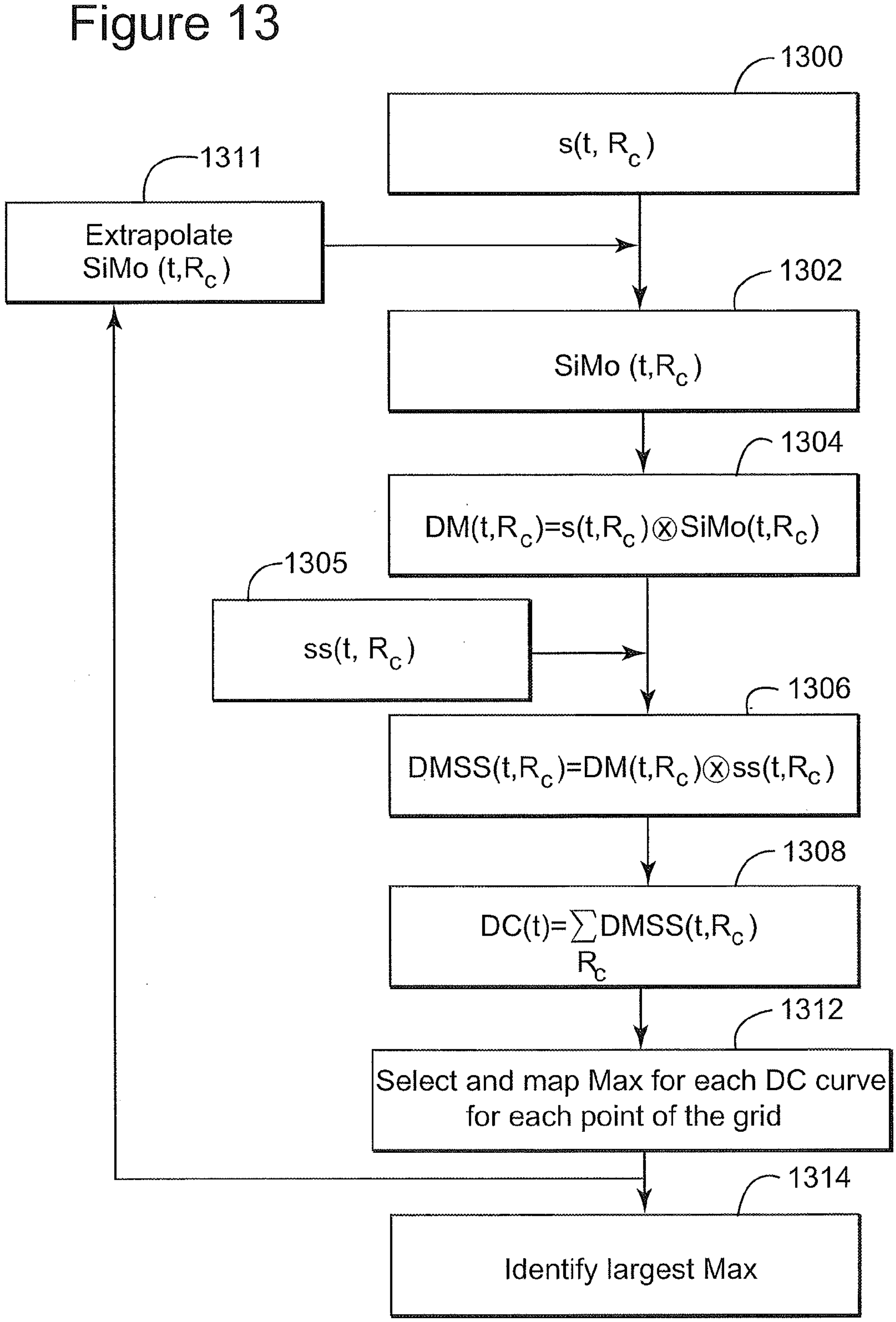
1300
s(t, Rc)
1311
Extrapolate
SiMo (t,Rc)
1302
SiMo (t,Rc)
1304
DM(t,Rc)=s(t,Rc)⊗SiMo(t,Rc)
1305
ss(t, Rc)
1306
DMSS(t,Rc)=DM(t,Rc)⊗ss(t,Rc)
1308
DC(t)=∑ DMSS(t,Rc)
Rc
1312
Select and map Max for each DC curve
for each point of the grid
1314
Identify largest Max

Figure 14

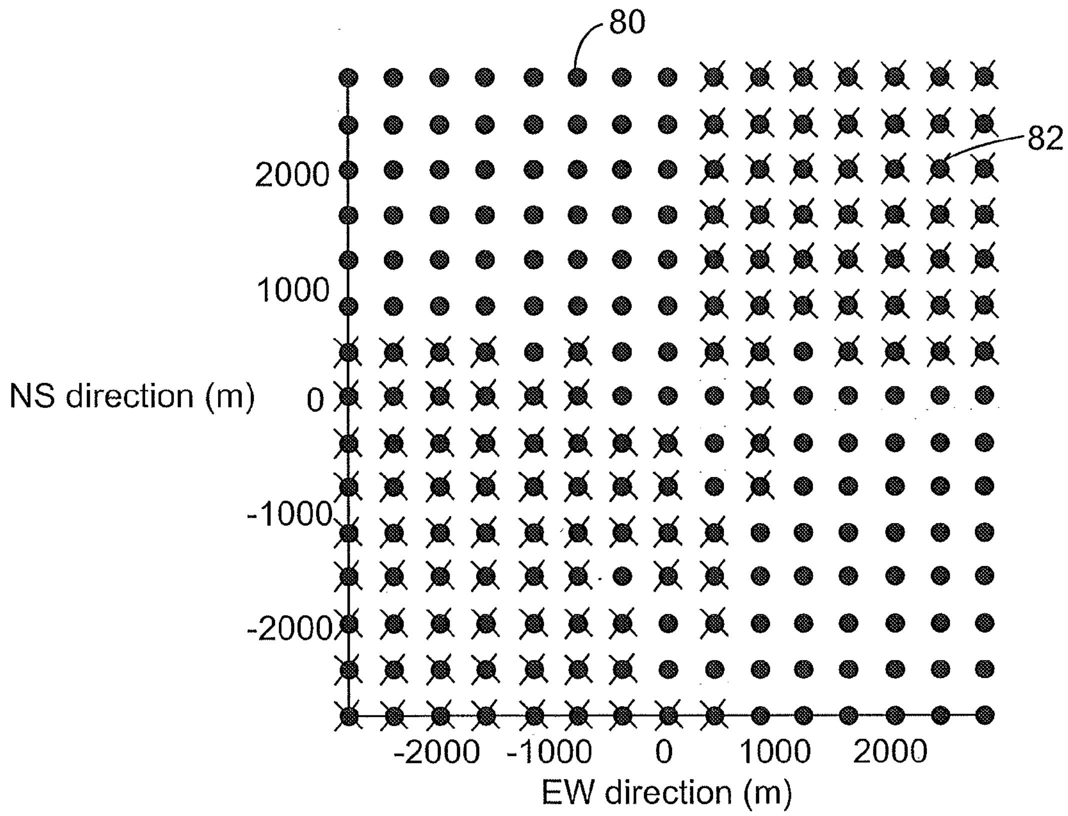
80
82
2000
1000
0
-1000
-2000
NS direction (m)
-2000 -1000 0 1000 2000
EW direction (m)

Figure 15

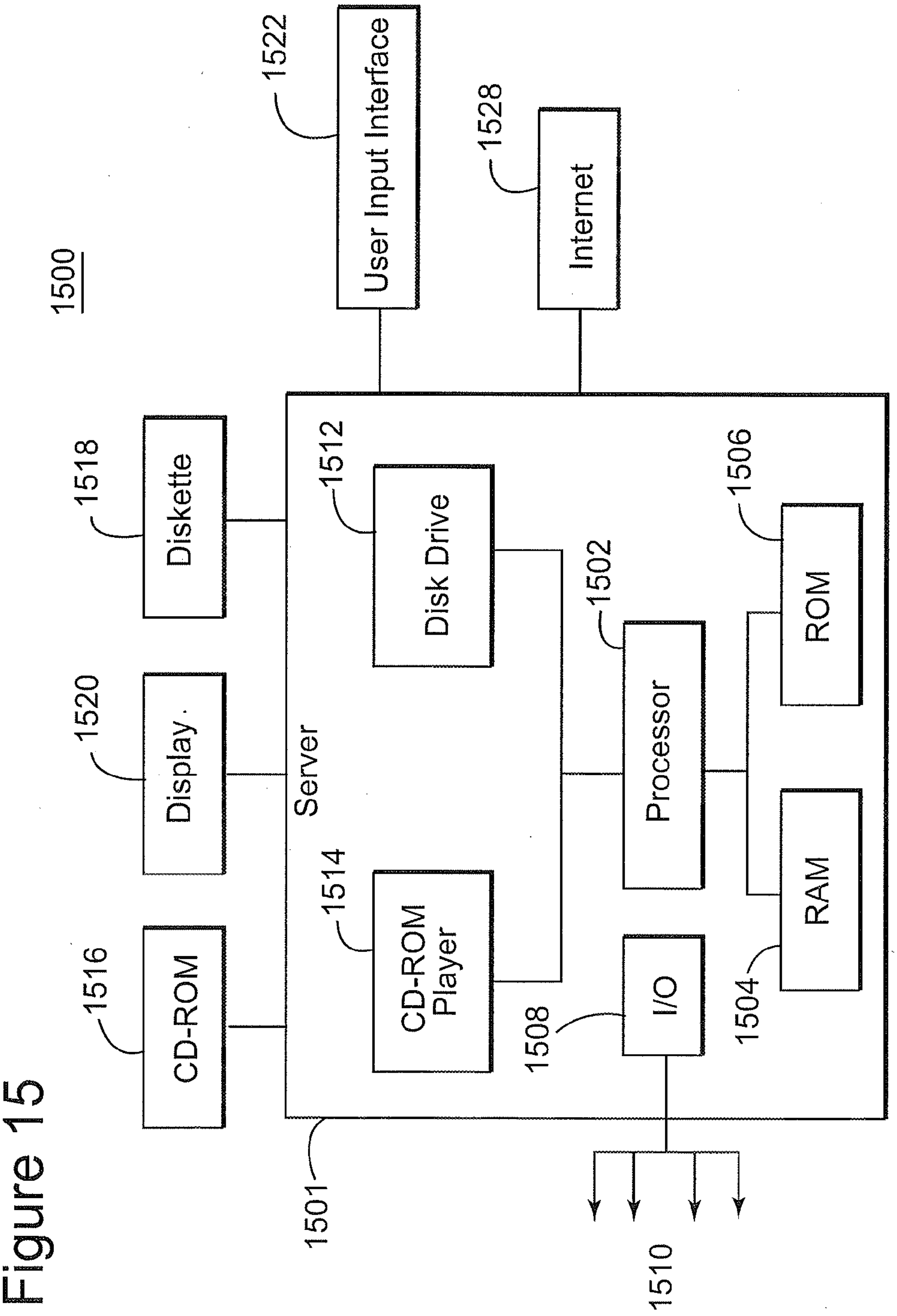
1500
1522
User Input Interface
1528
Internet
1518
Diskette
1520
Display
1516
CD-ROM
Server
1512
Disk Drive
1502
Processor
1506
ROM
1514
CD-ROM Player
1508
I/O
1504
RAM
1501
1510

Figure 16

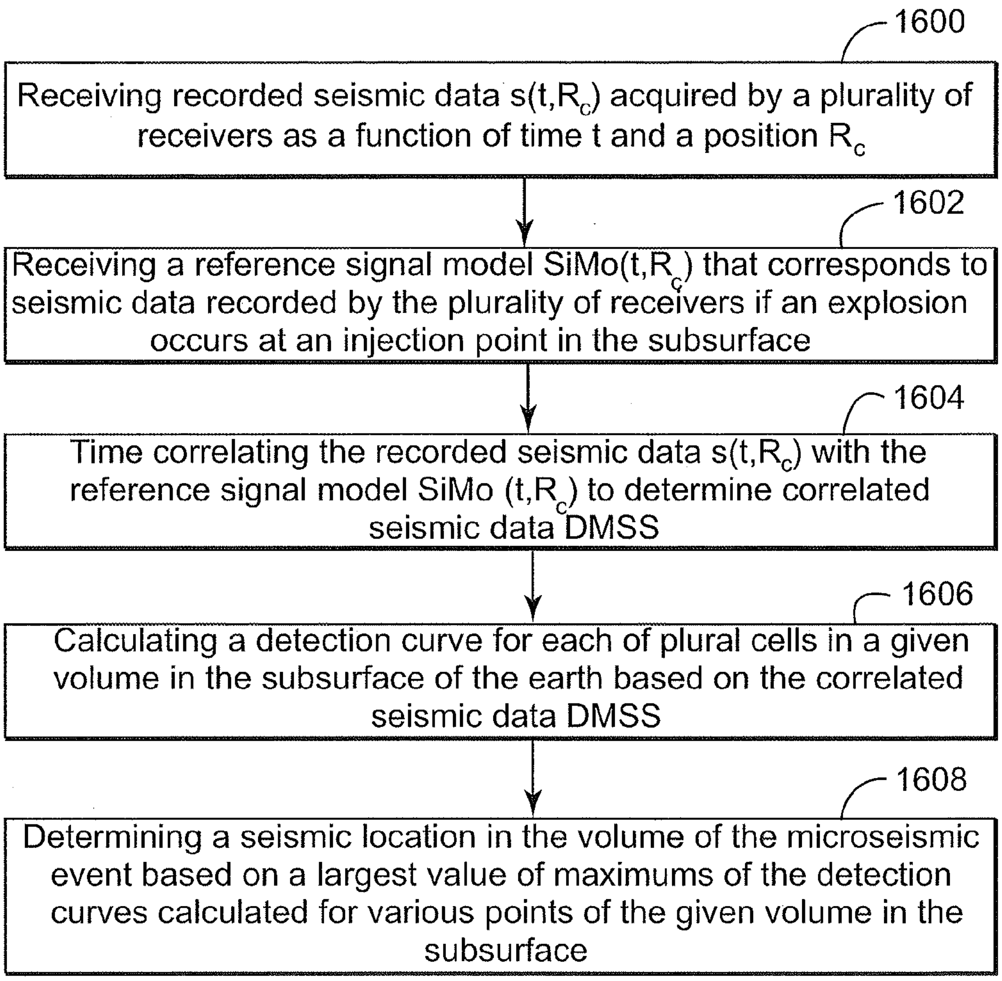
1600
Receiving recorded seismic data $s(t,R_c)$ acquired by a plurality of receivers as a function of time t and a position $R_c$
1602
Receiving a reference signal model $SiMo(t,R_c)$ that corresponds to seismic data recorded by the plurality of receivers if an explosion occurs at an injection point in the subsurface
1604
Time correlating the recorded seismic data $s(t,R_c)$ with the reference signal model SiMo $(t,R_c)$ to determine correlated seismic data DMSS
1606
Calculating a detection curve for each of plural cells in a given volume in the subsurface of the earth based on the correlated seismic data DMSS
1608
Determining a seismic location in the volume of the microseismic event based on a largest value of maximums of the detection curves calculated for various points of the given volume in the subsurface

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61576019 A
- US 20100302905 A, J. Meunier